# FASCICULE DE BREVET EUROPEEN

(11) **EP 2 559 085 B1**
(45) Date de publication et mention de la délivrance du brevet: **05.11.2014**
(21) Numéro de dépôt: 11717689.1
(22) Date de dépôt: 28.03.2011
(51) Int. Cl.: H01M 4/86, H01M 4/88, H01M 4/92, H01M 8/10, B82Y 30/00

(54) **STRUCTURATION D'ÉLECTRODE DE PILES À COMBUSTIBLE À MEMBRANE ÉCHANGEUSE DE PROTONS**
ELEKTRODENSTRUKTUR FÜR PROTONENAUSTAUSCHMEMBRAN-BRENNSTOFFZELLEN
ELECTRODE STRUCTURE FOR PROTON EXCHANGE MEMBRANE FUEL CELLS

(30) Priorité: 13.04.2010 FR 1052789
(43) Date de publication de la demande: 20.02.2013
(73) Titulaire: Commissariat à l'Énergie Atomique et aux Énergies Alternatives, 75015 Paris (FR)
(72) Inventeur: VINCENT, Rémi, F-38100 Grenoble (FR); ESCRIBANO, Sylvie, F-38000 Grenoble (FR); FRANCO, Alejandro, F-38320 Eybens (FR)
(74) Mandataire: Vuillermoz, Bruno
(86) Numéro de dépôt international: PCT/FR2011/050665
(87) Numéro de publication internationale: WO 2011/128549

(56) Documents cités:
- EP-A2- 0 945 910
- EP-A2- 1 429 403
- JP-A- 9 283 154
- JP-A- 2005 174 768
- JP-A- 2009 199 987
- US-A1- 2006 093 893

## Description

### DOMAINE DE L'INVENTION

La présente invention concerne le domaine des piles à combustible à membrane échangeuse de protons et plus particulièrement la structuration des électrodes entrant dans sa constitution.

Les piles à combustible à membrane échangeuse de protons étant des générateurs de courant, elles présentent un vaste domaine d'applications.

### ETAT ANTERIEUR DE LA TECHNIQUE

Le principe de fonctionnement des piles à combustible à membrane échangeuse de protons (PEMFC) repose sur la conversion de l'énergie chimique en énergie électrique par réaction catalytique entre le combustible (hydrogène) et le comburant (oxygène).

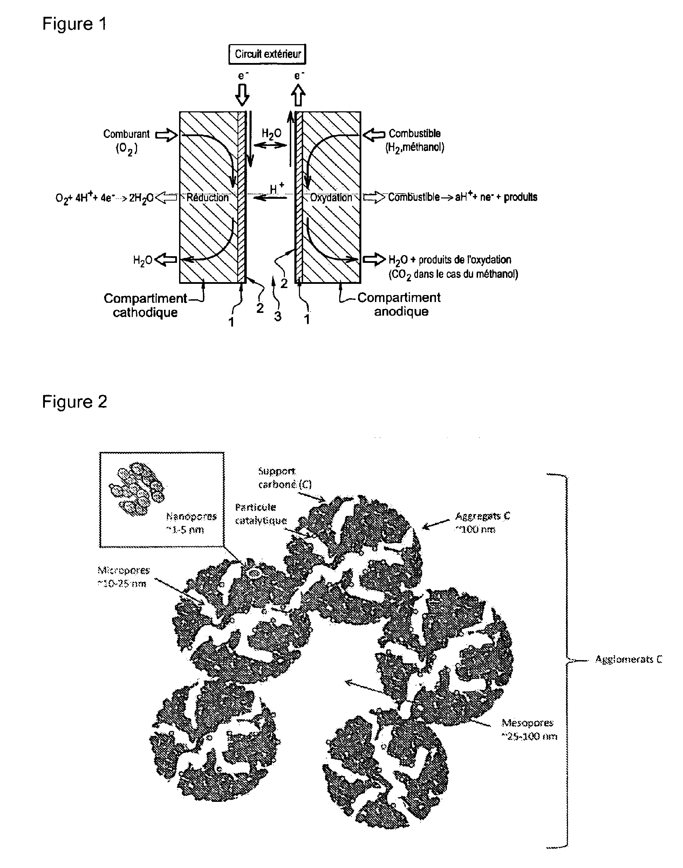

Les assemblages membrane-électrodes (AME) appelés communément coeurs de pile constituent les éléments de base des PEMFC. Comme illustré sur la figure 1, l'AME est généralement formé d'une membrane polymère (électrolyte, 3) au contact d'une couche catalytique (électrodes, 2) de part et d'autre. Les électrodes (anode et cathode) sont donc séparées par l'électrolyte qui est un milieu isolant électronique mais conducteur protonique. Des collecteurs de courant (1) assurent le transfert des électrons à la surface externe des électrodes.

Dans le cas des piles à combustible à membrane échangeuse de protons, l'électrolyte est généralement une membrane constituée d'un polymère échangeur cationique, tel que le Nafion® (Dupont) ou l'Aquivion® (Solvay).

Le combustible utilisé dans les piles à combustible à membrane échangeuse de protons peut être un gaz comme l'hydrogène ou un liquide comme par exemple un alcool (éthanol, méthanol, éthylène glycol).

Par exemple, les réactions suivantes illustrent les réactions électrochimiques ayant lieu aux électrodes dans le cas où le combustible et le comburant sont respectivement l'hydrogène et l'oxygène :

Anode : H₂ → 2H⁺ + 2e⁻ (1)

Cathode : O₂ + 4H⁺ + 4e⁻ → 2H₂O (2)

E°_{anode} = 0 V_{/ENH}

E°_{cathode} = 1,23 V_{/ENH}

Dans ce cas, la réaction globale est donc la suivante :

H₂ + ½ O₂ → H₂O E°_{eq} = E°_{cathode} - E°_{anode} = 1,23 V

La force électromotrice aux bornes de la pile est donc de 1,23V dans les conditions standards.

A l'anode, la décomposition de l'hydrogène adsorbé sur le catalyseur produit des protons H⁺ et des électrons e⁻. Les protons traversent ensuite la membrane polymère avant de réagir avec l'oxygène à la cathode. La réaction des protons avec l'oxygène à la cathode conduit à la formation d'eau et à la production de chaleur.

Ces réactions électrochimiques sont cinétiquement favorisées par la présence d'un catalyseur constituant les électrodes. Plusieurs matériaux peuvent être utilisés selon le type de réaction et de combustible, mais le platine s'avère être le catalyseur le plus efficace pour la plupart des réactions et des combustibles. Comme déjà indiqué, le catalyseur peut se présenter sous la forme de couches catalytiques qui sont généralement faites de nanoparticules de platine supportées sur des agrégats de carbone.

Le catalyseur peut être uniformément déposé à l'aide d'une encre catalytique sur la surface de la membrane ou sur la couche de diffusion. Cette encre catalytique est composée notamment du catalyseur supporté sur du carbone (carbone platiné), un liquide porteur et un polymère conducteur protonique. Ce dernier est en général de la même nature que l'électrolyte.

Le document JP 2005174768 décrit une composition pour électrode comprenant un catalyseur à base de platine, du Nafion^{®} et du noir de carbone.

En outre, le document EP 0 945 910 décrit une électrode comprenant un catalyseur à base de carbone platiné et un ionomère. La couche active décrite comprend de 0,01 à 5 mg de métal/cm² alors que le volume des pores représente de 0,7 à 1,3 ml/g.

Le document JP 92835154 décrit une composition d'électrode comprenant un ionomère et du carbone platiné. Par ailleurs, ce document précise qu'il est préférable que les pores, dont le diamètre est supérieur à 0,1 µm, représentent un volume au moins égal à 0,4 cm³/g.

Dans l'optique de l'utilisation et du développement des piles PEMFC pour le marché grand public, il est essentiel de minimiser les phénomènes de vieillissement du coeur de ces piles.

L'engorgement (noyage) par eau liquide de la cathode et la dégradation irréversible des nanomatériaux de la cathode (support carbone et catalyseur) font partie des principaux phénomènes participant à la dégradation des performances des piles.

La présence d'eau est essentielle au bon fonctionnement de la PEMFC car elle permet notamment de maintenir la conductivité du polymère conducteur protonique présent dans les électrodes et dans la membrane. Elle est produite à la cathode selon la réaction (2) mais peut aussi être apportée par humidification préalable des gaz. Cependant, une quantité excessive d'eau est néfaste car elle peut entrainer le noyage des sites catalytiques et donc un arrêt de la pile en rendant impossible l'accès des gaz aux sites réactifs.

Par ailleurs, la dégradation irréversible des matériaux des électrodes concerne essentiellement la couche active cathodique selon un mécanisme de corrosion bien connu et particulièrement néfaste pour la pile. Le support catalytique carbone à la cathode s'oxyde selon la réaction suivante:

C + 2 H₂O → CO₂ + 4H⁺ + 4e⁻ (3)

La réaction (3) est généralement thermodynamiquement possible étant donné son faible potentiel (0,2 V_{/ENH}) par rapport au potentiel cathodique d'une pile. Elle est favorisée par la présence d'eau liquide.

Cette dégradation est accentuée lorsque la pile est soumise à des cycles de puissance (J. P. Meyers et R. M. Darling J. Electrochem. Soc., 153 (8), A1432, 2006).

D'autre part, l'oxygène présent à l'anode est normalement réduit par l'hydrogène dans le compartiment anodique. Cependant, l'hydrogène présent peut s'avérer insuffisant lors des phases d'arrêt/démarrage, de cycles de puissance, de la formation des bouchons d'eau, de l'arrêt de l'alimentation en hydrogène. L'oxygène a alors recourt à d'autres sources de protons et, en particulier, à ceux produits par l'oxydation du carbone cathodique. L'oxygène présent à l'anode agit ainsi comme une pompe à protons et accentue la corrosion du carbone à la cathode.

La dégradation du platine à la cathode participe aussi à la diminution des performances de la pile. L'un des mécanismes de dégradation concerne l'oxydation, la dissolution et la recristallisation du platine.

D'autre part, la dégradation du support carbone cathodique peut entraîner le détachement des particules de platine et s'accompagner d'une réduction de la surface active due à l'agglomération des particules de platine (A. A. Franco et M. Gérard J. Electrochem. Soc., 155 (4), B367, 2008 ; Y. Shao, G. Yin et Y. Gao J. Power Sources., 171, 558, 2007). Elle est proportionnelle à la densité de nanoparticules de platine supportées sur sa surface (A. A. Franco et M. Gérard J. Electrochem. Soc., 155 (4), B367, 2008).

La maturation électrochimique est un autre mécanisme de dégradation du platine qui conduit à une augmentation de la taille des nanoparticules de platine et ainsi à une diminution de la surface électroactive et des performances de la pile. La maturation électrochimique est accentuée lorsque la quantité d'eau locale autour des nanoparticules augmente, ou lorsque la distance inter-nanoparticule diminue, ou lorsque la dispersion en taille des particules augmente.

Diverses solutions ont été proposées afin de diminuer la dégradation des performances d'une pile à combustible de type PEMFC au cours de son fonctionnement.

La réduction ou la suppression de la corrosion du carbone à la cathode peuvent ainsi être réalisées par modification de la nature du carbone support, par ajout de dioxyde de carbone dans le gaz comburant (cathode), par introduction de monoxyde de carbone dans le gaz combustible (anode) ou en utilisant une couche protectrice.

La modification de la nature du carbone support peut être réalisée en utilisant des supports de carbone plus résistants à la corrosion, tels que les nanotubes de carbone, les fullerènes, les graphites ou bien par traitement thermique du support de carbone.

L'ajout de dioxyde de carbone (CO₂) dans le gaz comburant (oxygène) à la cathode permet de déplacer l'équilibre de la réaction (3) vers la gauche pour ainsi ralentir la corrosion du carbone.

L'introduction de monoxyde de carbone (CO) à l'anode permet de limiter la corrosion du carbone à la cathode. En effet, en réagissant avec l'oxygène présent à l'anode, le CO limite l'effet « pompe à protons » décrit ci-dessus (A.A. Franco, M. Guinard. B. Barthe, O. Lemaire, Electrochimica Acta, 54 (22) (2009) 5267).

L'utilisation d'une couche protectrice non conductrice à base de silice (SiO₂) sur un ensemble nanotube de carbone/platine a été proposée (S.Takenaka, H.Matsumori, H.Matsune, E.Tanabe, and M.Kishida, J. Electrochem. Soc., 155 (9) (2008) B929). Cette couche a pour but de limiter la migration du platine et donc la formation d'agrégats de particules catalytiques responsable d'une diminution des performances de la pile. Cette solution agit donc sur la stabilité du catalyseur mais pas sur le carbone qui est déjà stable. Les auteurs précisent bien que les nanotubes de carbone présentent une bonne stabilité à la corrosion du carbone. Par ailleurs, la couche de SiO₂ est réalisée sur l'ensemble du système nanotubes de carbone/platine par hydrolyse de composés 3-aminopropyl-triethoxysilane et tetraethoxysilane préalablement mélangés à l'ensemble du système nanotubes de carbone/platine.

Un autre moyen visant à diminuer la dégradation des PEMFC consiste à réduire le phénomène de noyage de la cathode. Bien que le volume de la couche active puisse être diminué en déposant moins d'encre à base de carbone platiné et donc moins de catalyseur, la sensibilité au noyage de la cathode s'en retrouve accrue. Plusieurs solutions ont été proposées afin de remédier à ce phénomène.

Le document US 6 492 295 propose le dépôt de résines hydrophobes à la surface des particules de catalyseur pour limiter la formation d'eau sous forme liquide dans la cathode.

Le document US 5 723 173 propose l'introduction dans la couche active d'une poudre de carbone ayant subi préalablement un traitement hydrophobe à partir du polymère fluorocarboné.

D'autre part, le document US 2008/0090128 propose l'utilisation d'une poudre catalytique qui, après avoir été dispersée dans l'eau (0,5 g pour 20 g d'eau), a un pH au moins égal à 6. Cette gamme de pH assure une certaine hydrophobicité à la poudre présente dans la couche active.

Le document US 2008/0044697 propose la réalisation d'une couche active extrêmement résistante au mouillage par l'introduction de composés siliconés.

L'introduction d'une huile hydrophobe, du polydiméthysiloxane, dans les pores des électrodes a également été proposée (M. B. Ji, Z. D. Wei, S. G. Chen and L. Li, J. Phys. Chem. C 2009, 113, 765-771).

Toutes ces solutions ont pour objectif l'augmentation de l'hydrophobicité de la couche active. Cependant, ces traitements peuvent être sujets à des mécanismes de dégradation chimique après plusieurs centaines d'heures d'utilisation. De plus l'introduction d'un produit supplémentaire peut diminuer la porosité de l'électrode et ainsi limiter la diffusion de l'oxygène. L'introduction de matériaux hydrophobes peut par ailleurs, entraîner l'absence d'eau à proximité du catalyseur alors que sa présence est nécessaire pour les réactions électro-catalytiques ainsi que pour la conduction protonique.

La présente invention pallie tous ces inconvénients en proposant de structurer l'électrode afin de limiter la dégradation des performances réversible et irréversible d'une cathode.

Le phénomène de noyage et les phénomènes de corrosion du carbone et maturation électrochimique sont ainsi diminués.

### EXPOSE DE L'INVENTION

Le Demandeur a mis au point une électrode permettant de diminuer la teneur en catalyseur tout en maintenant ou améliorant les propriétés de la pile à combustible à membrane échangeuse de protons.

L'invention consiste à maintenir un volume de vide constant dans la couche active, ou couche catalytique, tout en diminuant la quantité de catalyseur. L'épaisseur de la couche active est maintenue constante alors que le taux de catalyseur diminue. Cette démarche va à l'encontre de celle de l'homme du métier, qui aurait tendance à diminuer l'épaisseur de la couche active pour diminuer la quantité de catalyseur.

Plus précisément, l'invention concerne une électrode pour des systèmes électrochimiques, tels que les piles à combustible. Ladite électrode est formée par une couche active constituée en outre d'agglomérats. La couche active comprend notamment des pores, au moins un catalyseur, au moins un ionomère et des particules électriquement conductrices.

Ladite électrode se caractérise en ce que le volume total des pores présents dans la couche active est compris entre 0,0005 cm³/cm² et 0,0012 cm³/cm² par rapport à la surface géométrique de l'électrode, de préférence 0,001 cm³/cm².

Par surface géométrique, on entend la surface à plat de l'électrode sans tenir compte des pores ou des reliefs de celle-ci.

Typiquement, l'épaisseur de la couche active constituant l'électrode selon l'invention est comprise entre 10 et 20 µm. Elle est généralement réalisée par dépôt d'une encre catalytique selon les méthodes connues de l'homme du métier.

Comme indiqué ci-dessus, la couche active comprend en outre au moins un ionomère qui est un matériau en général identique à celui constituant la membrane électrolyte séparatrice. La fonction première du ionomère est de conduire les protons produits ou consommés sur les sites catalytiques entre ces sites et la membrane. Le ionomère est un conducteur protonique choisi, de préférence, dans le groupe des polymères perfluorosulfonés comprenant en outre le Nafion® et l'Aquivion®. Les électrons produits ou consommés par les réactions sont acheminés via le carbone dans les électrodes et via un circuit électrique externe d'une électrode à l'autre.

La limitation du phénomène de noyage est favorisée par la présence de ionomère dans les micro et mésopores. Le ionomère, utilisé pour sa conductivité protonique, présente en effet une forte capacité d'absorption de l'eau qui demeure essentielle dans le fonctionnement et la structuration d'électrodes selon l'invention.

Les réactions électrochimiques ayant lieu à l'électrode sont cinétiquement favorisées par la présence d'un catalyseur dans la couche active constituant ladite électrode.

De manière non limitative, le catalyseur est en général supporté sur du carbone. Il peut être choisi dans le groupe comprenant notamment les catalyseurs suivants : PtRu/C, PtCo/C, Ru/C, Pt/C, Co/C, Mo/C, PtNi/C, PtCrCo/C, PtIrCu/C et PtCoMo/C, et leurs mélanges.

De manière avantageuse, le catalyseur est à base de platine, et plus avantageusement encore, le catalyseur est du platine supporté sur du carbone, autrement dit du carbone platiné. Le catalyseur supporté sur du carbone se présente avantageusement sous forme de nanoparticules. Préférentiellement, la quantité de catalyseur, avantageusement à base de platine, est comprise entre 0,03 mg/cm² et 0,25 mg/cm² par rapport à la surface géométrique de l'électrode.

Typiquement, et de manière non limitative, dans le cas du platine supporté sur du carbone, le poids en platine représente entre 5 et 30 % par rapport au carbone platiné.

De manière avantageuse, la teneur en catalyseur par pore est comprise entre 30 et 500 mg/cm³ par rapport au volume des pores, plus avantageusement entre 100 et 200 mg/cm³.

De manière générale, le rapport entre la teneur en catalyseur par pore et le volume de pore est déterminé en fonction de la nature du catalyseur.

L'invention permet de diminuer la charge en catalyseur par rapport au volume des pores. L'ajout de particules électriquement conductrices permet notamment de diminuer la quantité de catalyseur supporté sans modifier le volume de vide ou de pores de la couche active.

De façon préférentielle, la couche active d'une électrode selon l'invention comprend des particules électriquement conductrices choisies dans le groupe comprenant le noir de carbone, les fibres de carbone, les nanotubes de carbone ou un mélange de ces particules ou tout autre pigment conducteur. D'autres particules électriquement conductrices peuvent aussi être introduites dans l'encre catalytique utilisée pour former la couche active.

L'invention concerne également l'utilisation d'une électrode telle que décrite ci-dessus pour la fabrication d'une cathode dans des systèmes électrochimiques, tels que les piles à combustible. Elle peut aussi être utilisée pour la fabrication d'un assemblage membrane-électrodes (AME) dans des systèmes électrochimiques, tels que les piles à combustible.

D'autre part, l'invention concerne un procédé de fabrication d'une électrode telle que décrite ci-dessus par dépôt d'une encre catalytique comprenant au moins un catalyseur, au moins un ionomère et des particules électriquement conductrices. Les particules électriquement conductrices sont avantageusement choisies dans le groupe comprenant le noir de carbone chargé ou non en particules de platine à différents taux massiques (entre 5 et 70%), les fibres de carbone, les nanotubes de carbone ou un mélange de ces derniers. D'autres particules électriquement conductrices peuvent aussi être introduites dans l'encre catalytique. Ce procédé permet de maintenir le rapport volumique carbone/ionomère constant quelle que soit la composition de l'encre catalytique afin d'induire une réduction du rapport charge en catalyseur/volume de pore.

La teneur en catalyseur peut également être diminuée en augmentant la teneur en ionomère ou en diminuant la teneur en catalyseur dans le catalyseur supporté sur du carbone.

La structuration d'électrode selon l'invention permet de conserver un volume de pore minimum dans toutes les échelles (nano, micro et méso) structurales de l'électrode quels que soient les paramètres de formulation ou de procédé utilisés pour fabriquer l'électrode. Autrement dit, le rapport charge en catalyseur par pore/volume de pore est diminué.

Ceci se traduit par une meilleure dispersion du catalyseur dans chaque pore, avec en outre une réduction du rapport charge en catalyseur/volume de ionomère. En conséquence, l'eau liquide s'accumule au sein des pores à toutes les échelles, permettant ainsi la réduction des effets de noyage et l'amélioration des propriétés de transport de l'électrode vis-à-vis de l'oxygène vers les sites catalytiques. Ainsi, la sensibilité de la pile aux variations de demande de puissance est limitée. Par ailleurs, du fait de la moindre accumulation d'eau liquide, la dégradation du catalyseur et du support carboné est aussi diminuée. La moindre concentration de particules catalytiques ralentit aussi la corrosion du support carboné.

### EXEMPLES DE REALISATION

L'invention et les avantages qui en découlent ressortiront mieux des figures et exemples suivants, donnés à titre indicatif et non limitatif
La figure 1 représente le schéma du principe de fonctionnement d'une pile à combustible PEMFC.
La figure 2 représente le schéma de la structure d'une électrode d'une pile à combustible PEMFC.

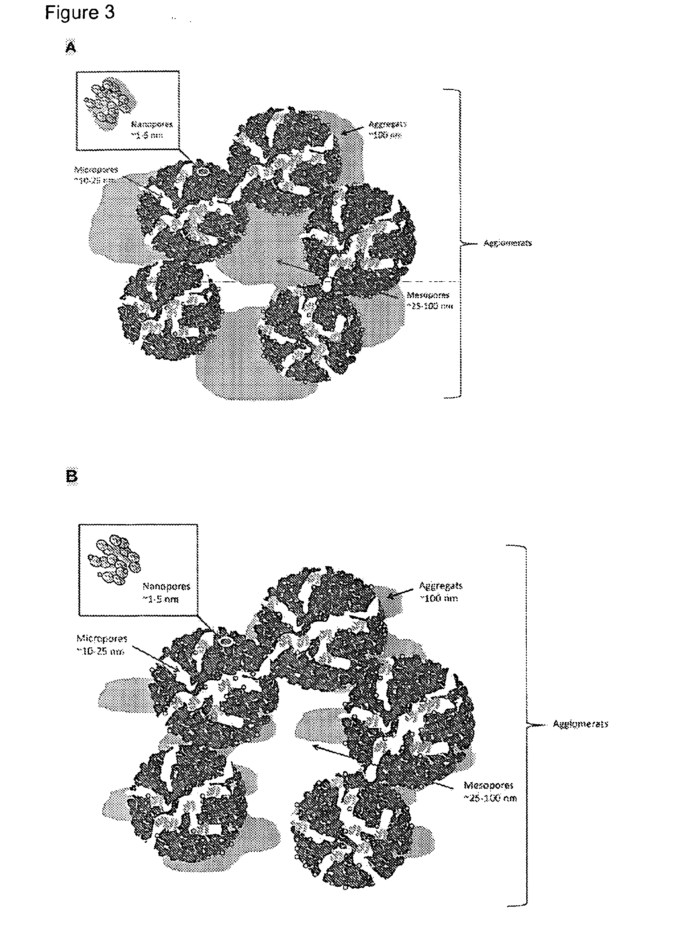

La figure 3 illustre la moindre capacité d'une électrode selon l'invention à se noyer (B) et à entrainer la maturation électrochimique des nanoparticules catalytiques et la dégradation du support carboné. La figure 3B illustre un AME selon l'invention contenant moins de platine que l'AME représenté sur la figure 3A.

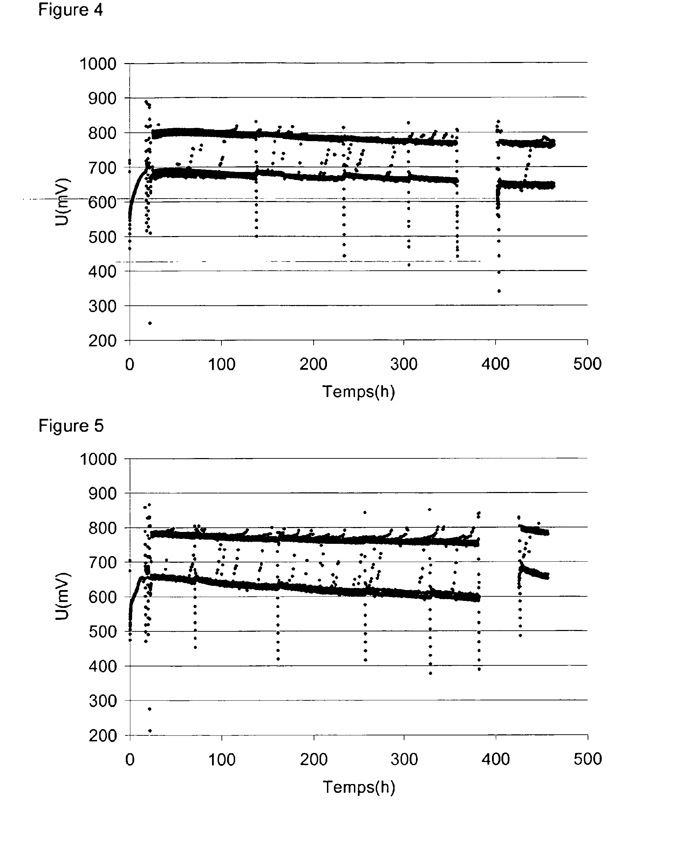

Six assemblages membrane-électrodes (AME [1] à [6]) ont été préparés et testés. Les résultats des tests (Réponse du potentiel de cellule en fonction du temps) sont illustrés par les figures 4 à 9.

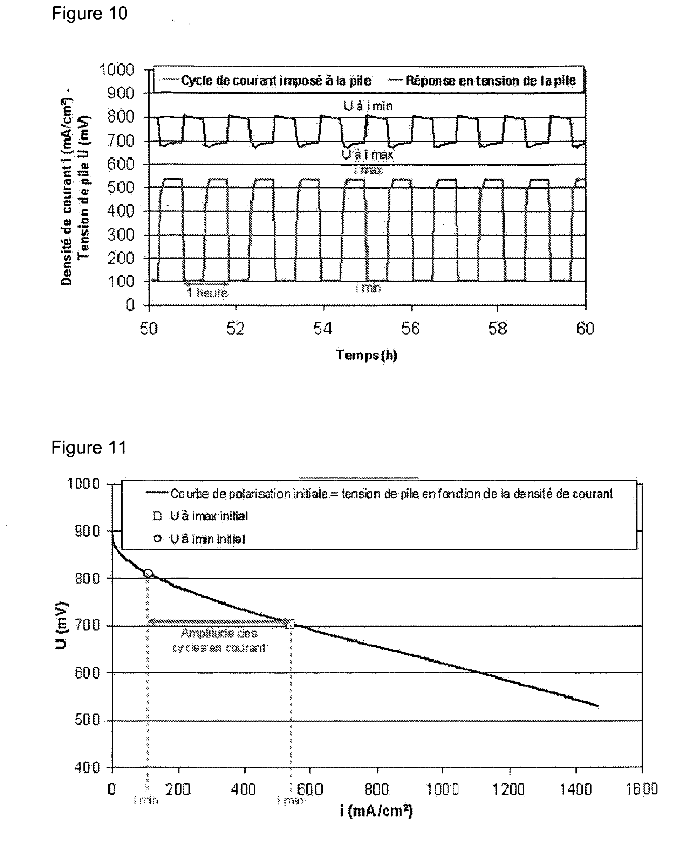

La figure 10 représente l'évolution de la tension et de la densité de courant en fonction du temps pour une pile à combustible comportant l'AME [1].
La figure 11 représente la courbe de polarisation d'une pile comportant l'AME [1]. Les points de fonctionnement initiaux correspondent aux bornes des cycles de fonctionnement.

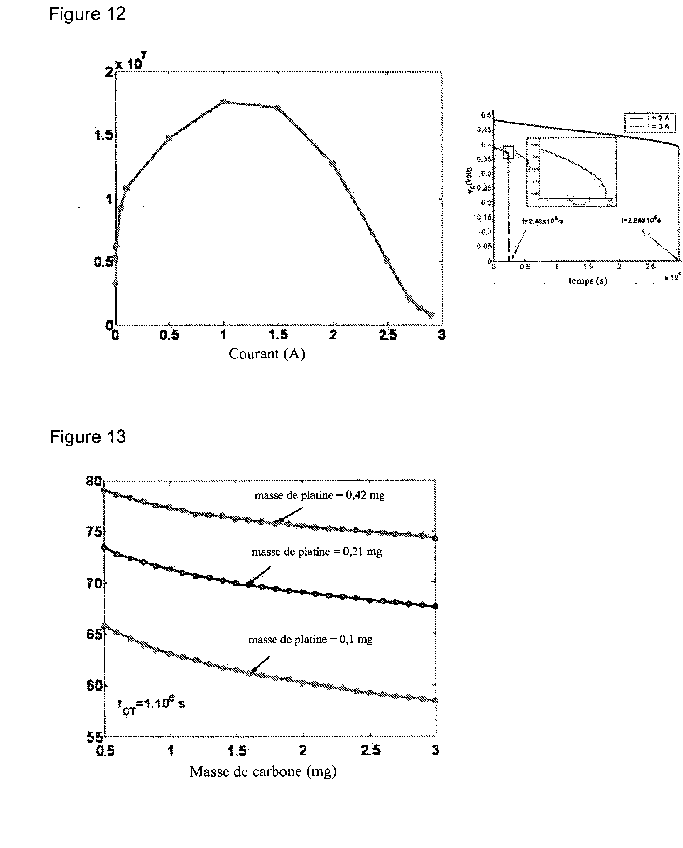

La figure 12 représente l'évolution calculée de la durabilité du coeur de pile en fonction du courant nominal (à gauche) et un exemple d'évolution du potentiel calculé à courant fixe (modèle MEMEPhys, à droite). La durée de vie est définie comme l'instant dans lequel le potentiel diminue dramatiquement à une valeur nulle.
La figure 13 représente la masse de carbone perdue après 300 heures de fonctionnement. Cette perte de carbone est calculée en fonction de la masse de carbone initiale pour différents chargements de platine (modèle MEMEPhys).

La composition constituant l'encre catalytique comprend notamment un ionomère, du carbone platiné et, pour les AME [3], [5] et [6], du noir de carbone. Le ionomère est un polymère perfluorosulfoné conducteur de protons tel que le Nafion® (Dupont) ou l'Aquivion® (Solvay). Dans tous les exemples présentés ci-après, le volume total des pores présents dans la couche active est de 0.001 cm³/cm² par rapport à la surface géométrique de l'électrode.
La figure 4 représente la réponse du potentiel de cellule aux cycles de fonctionnement à forte et faible intensités de courant (iₘₐₓ = 540 mA/cm² et iₘᵢₙ = 20% iₘₐₓ = 108 mA/cm²) simulant un fonctionnement de type automobile pendant plusieurs centaines d'heures. Cette courbe est obtenue à partir de l'AME [1] chargé à 0,47 mg/cm² de platine à la cathode par rapport à la surface géométrique de l'électrode. On observe une faible perte de performance après 450 heures de fonctionnement. Cette perte de performance est quasiment irréversible suite à un arrêt de la pile (cycle de régénération). L'arrêt étant une phase reconnue pour son effet asséchant sur les zones noyées des électrodes (du fait d'une auto-répartition de l'eau dans le volume de l'AME), ceci met en évidence un très faible noyage. La perte de performance irréversible est pour sa part attribuée; au niveau des électrodes, à la dégradation irréversible des composants liée à la dissolution, l'oxydation ou la maturation électrochimique du catalyseur et à la corrosion du support catalytique cathodique.
La figure 5 présente la réponse du potentiel de cellule aux mêmes cycles de fonctionnement avec un AME chargé à 0,17 mg/cm² de platine à la cathode par rapport à la surface géométrique de l'électrode, AME [2]. Il est important de remarquer que la même encre catalytique et le même procédé ont été utilisés pour réaliser les deux AME chargés à 0,47 (AME [1]) et 0,17 mg/cm² de platine à la cathode (AME [2]) ce qui implique que le volume de porosité de la cathode chargée à 0,17 mg/cm² (AME [2]) est approximativement 2,5 fois plus faible que celle chargée à 0,47 mg/cm² (AME [1]). L'étude de la Figure 5 montre clairement une dégradation des performances qui est accentuée pour les fortes puissances. Elle est très largement réversible après un arrêt avec régénération des performances ce qui est symptomatique d'un noyage de la cathode. La perte de performance irréversible est pour sa part attribuée aux mêmes causes que pour l'AME [1].

Toujours dans le but de diminuer la quantité de platine mais en conservant une durabilité importante, une encre a été formulée dans le but d'obtenir un chargement de 0,17 mg/cm² de platine à la cathode par rapport à la surface géométrique de l'électrode (AME [3]) avec un volume de vide équivalent à celui d'une cathode pratiquement trois fois plus chargée.

Cette encre est obtenue grâce à l'ajout de noir de carbone standard dans l'encre (pour conserver la percolation de l'ionomère, un ajout proportionnel au noir de carbone est effectué).

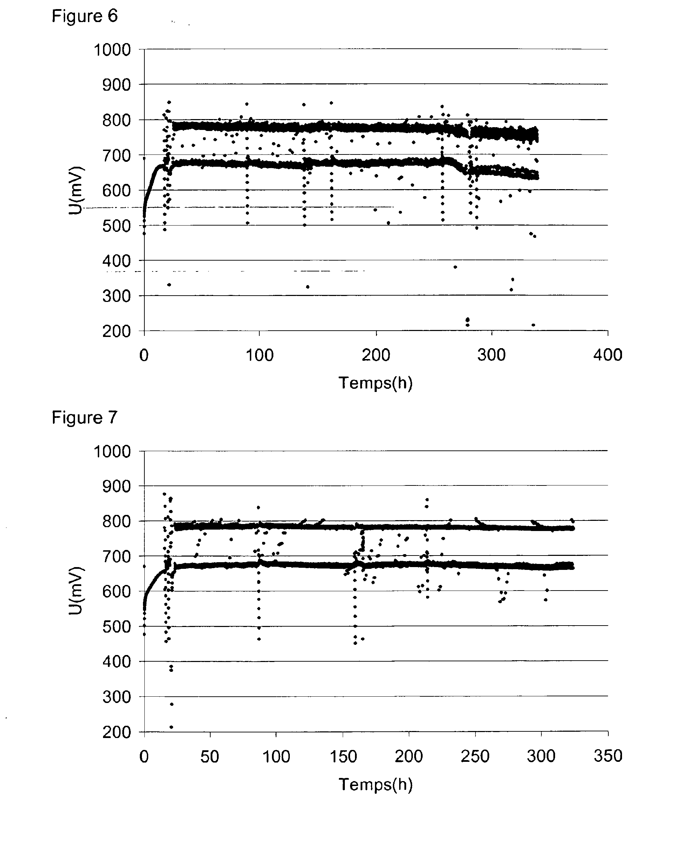

La courbe de la figure 6 représente les mêmes cycles de fonctionnement pour l'AME [3]. L'étude de cette courbe montre que son comportement est très proche de l'AME [1] chargé à 0,47 mg/cm² mais avec pratiquement trois fois moins de platine. Ceci indique clairement que, dans ce cas, la durabilité de la performance n'est pas liée à la quantité de platine mais au rapport charge en platine à l'échelle du pore/volume du pore.

Deux autres structures d'AME ont été testées dans le but de valider les observations liées aux performances de l'AME [3]. L'AME [4] comprend une cathode composée d'un catalyseur carbone platiné ayant un taux de platine inférieur à celui utilisé pour les AME [1] à [3] décrits ci-avant. La mise en oeuvre de ce nouveau carbone platiné permet d'obtenir une structure de cathode très proche de celle de l'AME [3] (sans ajout de carbone).

L'étude de la figure 7 permet de mettre en évidence un comportement de l'AME [4] similaire à l'AME [3]. Ceci permet de conclure que plus que la formulation exacte de la couche active, c'est le ratio charge en platine à l'échelle du pore/volume du pore qui est la grandeur pertinente pour améliorer la durabilité des performances.

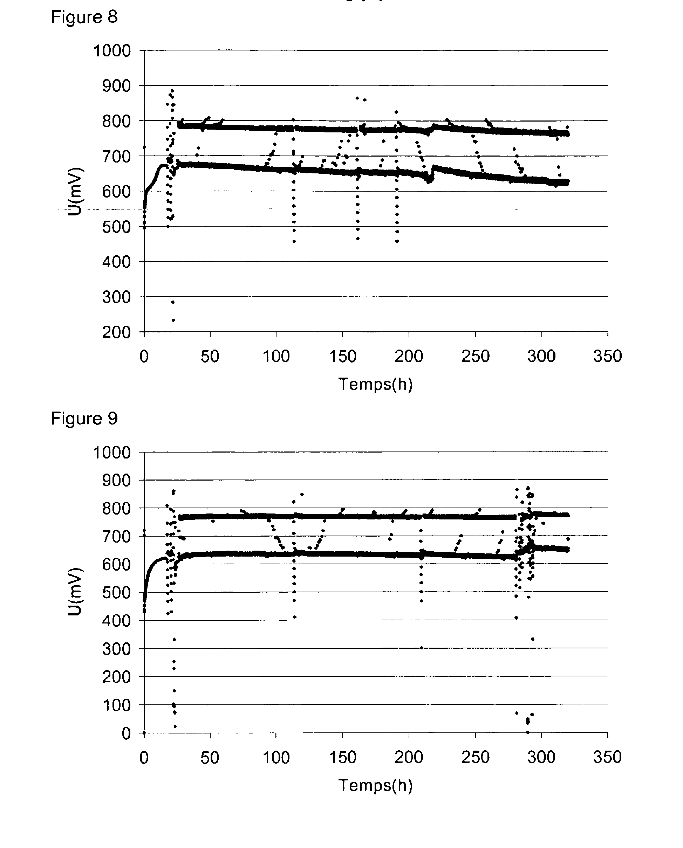

Le dernier AME testé a une structure en deux couches, la première couche (au contact de la membrane après assemblage) est identique à la couche active cathodique de l'AME [2] avec un chargement de 0,17 mg/cm² par rapport à la surface géométrique de l'électrode, la deuxième couche est composée seulement de carbone et de ionomère. Cette méthode permet d'obtenir une composition moyenne d'électrode identique aux AME [3] et AME [4] mais avec une répartition de platine équivalente à l'AME [2] (donc limité dans une épaisseur faible avec un rapport charge en platine/volume de pores inchangé dans cette épaisseur). L'étude de la figure 8 montre que l'AME [5] se comporte comme l'AME [2] (avec une pente du même ordre et plus élevée que la pente obtenue avec l'AME [3] et l'AME [4]). Ceci permet de confirmer la prépondérance de la charge en platine à l'échelle du pore/volume du pore sur la durabilité des performances.

Dans le but de mettre en évidence l'apport de l'invention jusqu'à de très faibles chargements, un nouvel AME, AME [6], a été fabriqué avec un chargement de 0,12 mg/cm² par rapport à la surface géométrique de l'électrode, l'encre utilisée pour réaliser les électrodes a été formulée de la même manière que les autres mais seulement avec un taux de carbone plus important, ceci dans le but d'obtenir une couche active moins chargée mais toujours avec la même épaisseur.

L'étude de la courbe représentée sur la figure 9 montre que, même si les performances sont légèrement moins bonnes, le comportement de l'AME [6] est très stable et ceci avec un chargement en platine plus de quatre fois inférieur à celui de l'AME [1]. Ce dernier test montre clairement que, dans ce cas, la durabilité de la performance n'est pas liée à la quantité de platine mais au ratio charge en platine à l'échelle du pore/volume du pore.

## Revendications

1. Electrode pour des systèmes électrochimiques, tels que les piles à combustible, formée par une couche active comprenant :
- des pores ;
- au moins un catalyseur ;
- au moins un ionomère ;
- des particules électriquement conductrices,
la teneur en catalyseur par pore étant comprise entre 30 et 500 mg/cm³ par rapport au volume des pores.

2. Electrode selon la revendication 1 ***caractérisée* en ce que** la teneur en catalyseur par pore est comprise entre 100 et 200 mg/cm³

3. Electrode selon l'une des revendications 1 à 2, ***caractérisée* en ce que** l'épaisseur de la couche active est comprise entre 10 et 20 µm.

4. Electrode selon l'une des revendications 1 à 3, ***caractérisée* en ce que** le catalyseur est à base de platine.

5. Electrode selon l'une des revendications 1 à 4, ***caractérisée*** en ce le catalyseur est du carbone platiné, avantageusement sous forme de nanoparticules.

6. Electrode selon l'une des revendications 1 à 5, ***caractérisée* en ce que** la quantité de catalyseur est comprise entre 0,03 mg/cm² et 0,25 mg/cm² par rapport à la surface géométrique de l'électrode.

7. Electrode selon l'une des revendications 1 à 6, ***caractérisée* en ce que** le volume total des pores est compris entre 0,0005 cm³/cm² et 0,0012 cm³/cm² par rapport à la surface géométrique de l'électrode, de préférence 0,001 cm³/cm².

8. Electrode selon l'une des revendications 1 à 7, ***caractérisée* en ce que** les particules électriquement conductrices sont choisies dans le groupe comprenant le noir de carbone, les fibres de carbone ou les nanotubes de carbone, un mélange de ces particules ou tout autre pigment conducteur.

9. Utilisation d'une électrode selon l'une des revendications 1 à 8 pour la fabrication d'une cathode dans des systèmes électrochimiques, tels que les piles à combustible.

10. Utilisation d'une électrode selon l'une des revendications 1 à 8 pour la fabrication d'un assemblage membrane-électrodes (AME) dans des systèmes électrochimiques, tels que les piles à combustible.

11. Procédé de fabrication d'une électrode selon l'une des revendications 1 à 8 par dépôt d'une encre catalytique comprenant au moins un catalyseur, au moins un ionomère et des particules électriquement conductrices.

## Patentansprüche

1. Elektrode für elektrochemische Systeme wie etwa Brennstoffzellen, die durch eine aktive Schicht gebildet ist, die aufweist:
- Poren;
- mindestens einen Katalysator;
- mindestens ein Ionomer;
- elektrisch leitfähige Partikel,
wobei der Katalysatorgehalt pro Pore zwischen 30 und 500 mg/cm³ im Verhältnis zum Porenvolumen beträgt.

2. Elektrode nach Anspruch 1, **dadurch gekennzeichnet, dass** der Katalysatorgehalt pro Pore zwischen 100 und 200 mg/cm³ beträgt.

3. Elektrode nach einem der Ansprüche 1 bis 2, **dadurch gekennzeichnet, dass** die Dicke der aktiven Schicht zwischen 10 und 20 µm beträgt.

4. Elektrode nach einem der Ansprüche 1 bis 3, **dadurch gekennzeichnet, dass** der Katalysator auf Basis von Platin ist.

5. Elektrode nach einem der Ansprüche 1 bis 4, **dadurch gekennzeichnet, dass** es sich bei dem Katalysator um platinierten Kohlenstoff handelt, vorzugsweise in Form von Nanopartikeln.

6. Elektrode nach einem der Ansprüche 1 bis 5, **dadurch gekennzeichnet, dass** die Katalysatormenge zwischen 0,03 mg/cm² und 0,25 mg/cm² im Verhältnis zur geometrischen Oberfläche der Elektrode beträgt.

7. Elektrode nach einem der Ansprüche 1 bis 6, **dadurch gekennzeichnet, dass** das Gesamtvolumen der Poren zwischen 0,0005 cm³/cm² und 0,0012 cm³/cm² im Verhältnis zur geometrischen Oberfläche der Elektrode, vorzugsweise 0,001 cm³/cm² beträgt.

8. Elektrode nach einem der Ansprüche 1 bis 7, **dadurch gekennzeichnet, dass** die elektrisch leitfähigen Partikel aus der Gruppe ausgewählt sind, die Ruß, Kohlenstofffasern oder Kohlenstoffnanoröhrchen, ein Gemisch dieser Partikel oder irgendein anderes leitfähiges Pigment umfasst.

9. Verwendung einer Elektrode nach einem der Ansprüche 1 bis 8 zur Herstellung einer Kathode in elektrochemischen Systemen wie etwa Brennstoffzellen.

10. Verwendung einer Elektrode nach einem der Ansprüche 1 bis 8 zur Herstellung einer Membran-Elektroden-Anordnung (AME) in elektrochemischen Systemen wie etwa Brennstoffzellen.

11. Verfahren zur Herstellung einer Elektrode nach einem der Ansprüche 1 bis 8 durch Abscheiden einer katalytischen Tinte, die mindestens einen Katalysator, mindestens ein Ionomer und elektrisch leitfähige Partikel enthält.

## Claims

1. An electrode for electrochemical systems, such as fuel cells, formed by an active layer comprising:
- pores;
- at least one catalyst;
- at least one ionomer;
- electrically-conductive particles,
the content of catalyst per pore ranging between 30 and 500 mg/cm³ with respect to the pore volume.

2. The electrode of claim 1, wherein the catalyst content per pore ranges between 100 and 200 mg/cm³.

3. The electrode of any of claims 1 and 2, wherein the thickness of the active layer ranges between 10 and 20 micrometers.

4. The electrode of any of claims 1 to 3, wherein the catalyst is based on platinum.

5. The electrode of any of claims 1 to 4, wherein the catalyst is platinized carbon, advantageously in the form of nanoparticles.

6. The electrode of any of claims 1 to 5, wherein the amount of catalyst ranges between 0.03 mg/cm² and 0.25 mg/cm² with respect to the geometric surface of the electrode.

7. The electrode of any of claims 1 to 6, wherein the total volume of the pores ranges between 0.0005 cm³/cm² and 0.0012 cm³/cm² with respect to the geometric surface of the electrode, preferably 0.001 cm³/cm².

8. The electrode of any of claims 1 to 7, wherein the electrically- conductive particles are selected from the group comprising carbon black, carbon fibers, carbon nanotubes, or a mixture of these particles or any other conductive pigment.

9. A use of the electrode of any of claims 1 to 8 for the manufacturing of a cathode in electrochemical systems, such as fuel cells.

10. A use of the electrode of any of claims 1 to 8 for the manufacturing of a membrane-electrode assembly (MEA) in electrochemical systems, such as fuel cells.

11. A method for manufacturing the electrode of any of claims 1 to 8 by deposition of a catalytic ink comprising at least one catalyst, at least one ionomer, and electrically-conductive particles.
